# EUROPEAN PATENT APPLICATION

(11) **EP 2 424 078 A2**
(43) Date of publication of application: **29.02.2012**
(21) Application number: 11006345.0
(22) Date of filing: 02.08.2011
(51) Int. Cl.: H02K 3/52

(54) **Stator of motor, motor for blower and air conditioner**

(30) Priority: 31.08.2010 JP 2010193354
(71) Applicant: Mitsubishi Electric FA Industrial Products Corporation, Fukuoka-shi, Fukuoka 819-0192 (JP)
(72) Inventor: Kato, Takeharu, Chiyoda-ku Tokyo 100-8310 (JP); Matsuda, Shigeru, Chiyoda-ku Tokyo 100-8310 (JP); Yamamoto, Mineo, Chiyoda-ku Tokyo 100-8310 (JP)
(74) Representative: Pfenning, Meinig & Partner GbR

(57) **Abstract**

[Problem] To provide a stator of a motor in which a terminal can be easily inserted into a quadrangular hole formed in a rectangular hole until the terminal reaches a bottom part of the quadrangular hole without chamfering the terminal or without widening the quadrangular hole formed in the insulation part and the quadrangular hole formed in a substrate.

[Means for Resolution] A quadrangular hole 3a formed in an insulation part 3 on a connection side is formed into a rectangular shape extending in the circumferential direction of a stator core (1) when the stator core (1) is viewed from above, and two side surfaces of the rectangular shape which face each other in an opposed manner in the circumferential direction are inclined such that a distance between the side surfaces is gradually narrowed as the side surfaces extend toward a depth side, and a distal end of one end portion of a terminal 4 is formed obliquely, and when an insulation insertion portion 4b of such one end portion is inserted into the quadrangular hole 3a, the terminal 4 is inclined in the direction that a wire catching portion 4c is lowered and a distal end of the insulation insertion portion 4b is engaged with a bottom part of the quadrangular hole 3a.

## Description

### [Technical Field]

The present invention relates to a stator of a motor having three terminals for supplying electricity to windings of three-phase single Y connection, a motor for a blower using the stator, and an air conditioner mounting the motor for the blower thereon.

### [Background Art]

This type of terminal is formed such that both end portions of the terminal are bent to be directed in directions opposite to each other, and is assembled into a quadrangular hole formed in an insulation part on a connection side which is one constitutional part of a stator. The terminal is formed using a fine flat wire having a thickness of 0.5mm and a width of 1.0mm (see patent document 1, for example).

### [PriorArt Document]

### [Patent Document]

[Patent Document 1] JP-A-2009-254203 (page 4, Fig. 1-Fig. 2)

### [Summary of the Invention]

### [Problems that the Invention is to solve]

In the above-mentioned conventional terminal, when inserting an end part of the terminal into the quadrangular hole formed in an insulation part until the terminal reaches a bottom part of the quadrangular hole, since the distal end surface of the terminal is flat, there has been a case where a corner of the distal end surface of the terminal is bent by being caught by the quadrangular hole formed in the insulation part or a case where the terminal cannot be inserted into the quadrangular hole until the terminal reaches the bottom part of the quadrangular hole.
Although there has been proposed a method where a width of a quadrangular hole formed in the insulation part is increased so as to allow the insertion of the terminal into the quadrangular hole formed in the insulation part until the terminal reaches a bottom part of the quadrangular hole without bending the terminal. In this case, however, a range where the terminal tilts toward a left or right side (radial direction of a stator) with respect to the quadrangular hole formed in the insulation part is broadened and hence, in inserting the terminal into a quadrangular hole formed in a substrate in a succeeding step, it is necessary to adjust the position of the terminal with respect to the quadrangular hole formed in the substrate.
Further, there has been also proposed a method where a quadrangular hole formed in a substrate is widened so as to make the positional adjustment of a terminal easily. In this case, however, in soldering the terminal to a substrate, solder leaks from a gap defined between the terminal and the quadrangular hole formed in the substrate thus giving rise to a possibility that the terminal cannot be bonded to the substrate.
Still further, it may be possible to make the insertion of a terminal into a quadrangular hole formed in an insulation part and a quadrangular hole formed in a substrate easy by chamfering corners of the terminal. In this case, however, there arises a drawback that the number of machining steps is increased so that scrap material treatment becomes necessary thus pushing up a cost. There also arises a drawback that due to the generation of the scrap material, a yield rate is lowered thus pushing up a material cost.

The present invention has been made to overcome the above-mentioned drawbacks, and it is an object of the present invention to provide a stator of a motor where a terminal can be easily inserted into a quadrangular hole formed in an insulation part until the terminal reaches a bottom part of the quadrangular hole without chamfering the terminal or without widening the quadrangular hole formed in the insulation part and the quadrangular hole formed in the substrate respectively, and can be inserted into a quadrangular hole formed in a substrate without performing the positional adjustment between the quadrangular hole and the terminal, a motor for a blower and an air conditioner.

### [Means for solving the problem]

The stator of a motor according to the present invention includes: a stator core which includes a plurality of teeth which project toward an axis; insulations part which are applied to respective teeth of the stator core; windings of three-phase single Y connection which are wound around the teeth by a direct concentration winding method respectively, and three terminals, which are inserted into three holes formed in the insulation parts on the connection side respectively, for supplying electricity to the windings of the three-phase single Y connection, in which each of the terminals is formed by bending such that both end portions thereof are directed in directions opposite to each other, and a distal end of one end portion which is inserted into each hole is formed obliquely.

### [Advantageous effects of the Invention]

According to the present invention, since the distal end of one end portion of each terminal is formed obliquely, the terminal can be easily inserted into the quadrangular hole formed into the insulation part until the terminal reaches the bottom part of the quadrangular hole without chamfering corners of the terminal or without widening the quadrangular hole formed in the insulation part. Accordingly, when the terminal is inserted into the quadrangular hole formed in the insulation part, there is no possibility that the terminal is caught or bent by the quadrangular hole. Further, also in inserting the terminal which is inserted into the quadrangular hole formed in the insulation part into the quadrangular hole formed in the substrate, the terminal can be easily inserted into the quadrangular hole formed in the substrate without performing the positional adjustment.
Further, since the terminal can be inserted into the quadrangular hole formed in the substrate without widening the quadrangular hole formed in the substrate, a gap defined between the terminal and the quadrangular hole formed in the substrate can be made small and hence, leaking of solder can be prevented thus enhancing the quality of soldering.
Still further, as described previously, the distal end of one end portion of the terminal is just formed obliquely and hence, a cost for working can be suppressed whereby a yield rate of a material is enhanced thus realizing the reduction in cost.

### [Brief Description of the Drawings]

[Fig. 1] A perspective view showing a stator of a motor according to an Embodiment 1 as viewed from a connection side.
[Fig. 2] A view showing a shape of a quadrangular hole formed in an insulation part for assembling a terminal of the stator shown in Fig. 1.
[Fig. 3] An enlarged perspective view of the terminal shown in Fig. 1.
[Fig. 4] A view showing a state where the terminal in a state shown in Fig. 3 is inserted into the insulation part of the stator.
[Fig. 5] A perspective view showing the positional relationship between the stator and a substrate in Fig. 1.
[Fig. 6] A view showing a state where the terminal in a state shown in Fig. 4 is inserted into the substrate.
[Fig. 7] A view showing the manner of taking a material of the terminal before forming the terminal shown in Fig. 3.
[Fig. 8] A view showing the constitution of an air conditioner in an Embodiment 2.

### [Mode for carrying out the Invention]

### Embodiment 1

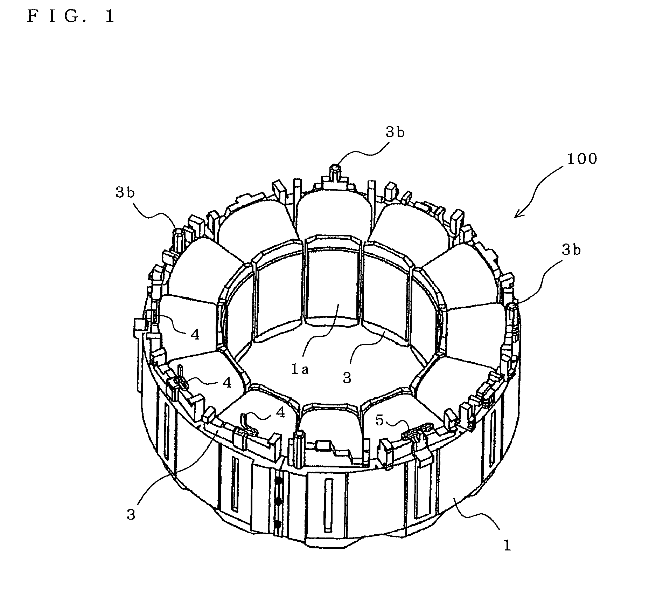

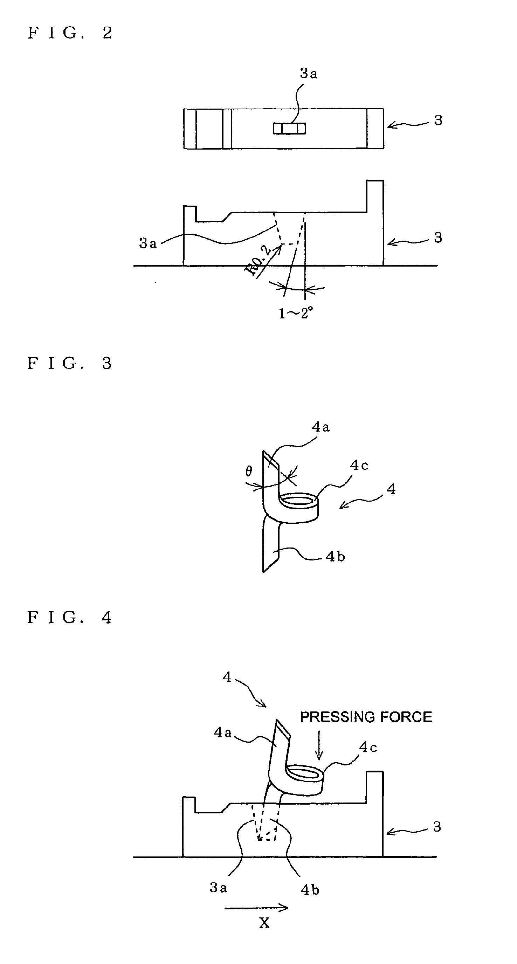

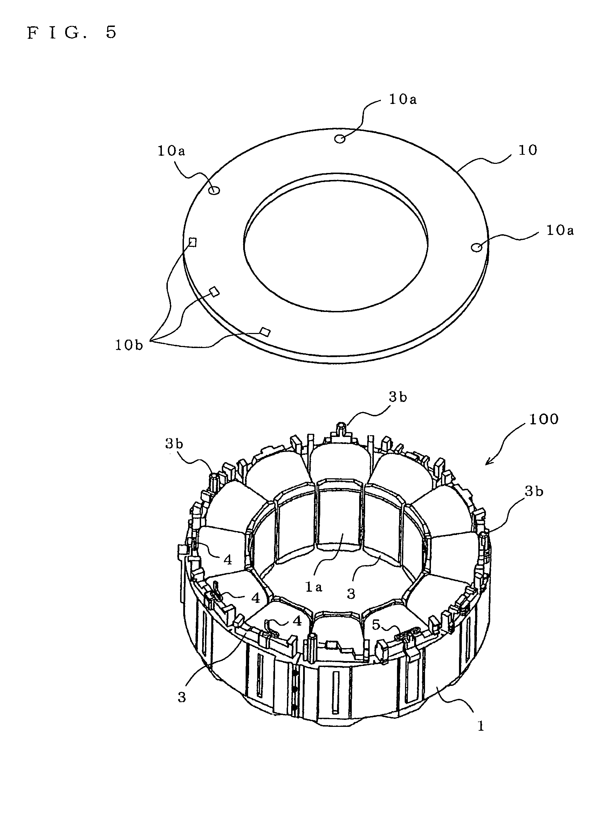

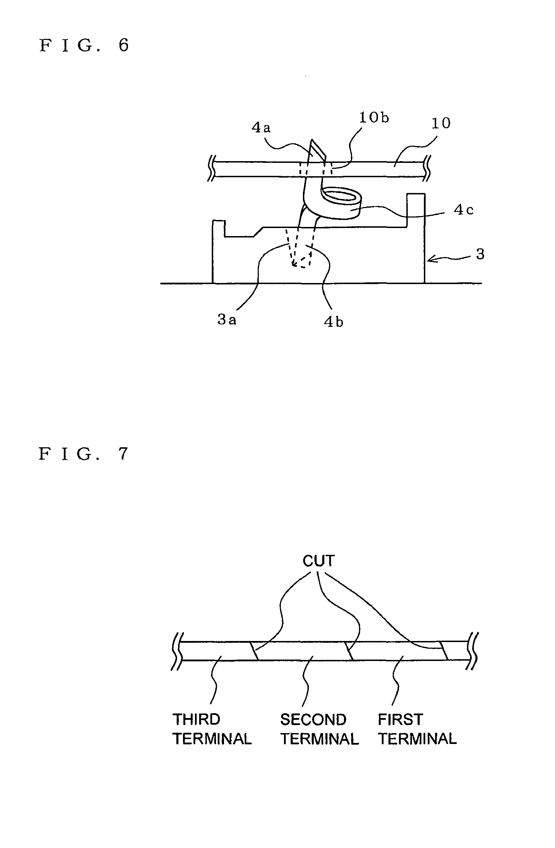

Fig. 1 is a perspective view showing a stator of a motor according to an Embodiment 1 as viewed from a connection side, Fig. 2 is a view showing a shape of a quadrangular hole formed in an insulation part for assembling a terminal of the stator shown in Fig. 1, Fig. 3 is an enlarged perspective view of the terminal shown in Fig. 1, Fig. 4 is a view showing a state where the terminal in a state shown in Fig. 3 is inserted into the insulation part of the stator, Fig. 5 is a perspective view showing the positional relationship between the stator and a substrate in Fig. 1, Fig. 6 is a view showing a state where the terminal in a state shown in Fig. 4 is inserted into the substrate, and Fig. 7 is a view showing the manner of taking a material of the terminal before forming the terminal shown in Fig. 3.

A stator 100 of a motor according to this embodiment includes, as shown in Fig. 1, a stator core 1 which includes, for example, 12 pieces of teeth 1a which project toward an axis, an insulation part 3 which is applied to each tooth 1a of the stator core 1, windings 2 of three-phase single Y connection which are wound around the teeth 1a by a direct concentration winding method, and three terminals 4 which are inserted into three quadrangular holes formed in the insulation parts 3 on a connection side respectively for supplying electricity to the windings 2 of the three-phase single Y connection. The stator core 1 is formed such that, for example, an electromagnetic steel sheet having a thickness of approximately 0.1 to 0.7mm is formed into a strip shape by blanking, the strip-shaped electromagnetic steel sheets are stacked by caulking, welding, bonding or the like, and the three-phase single Y connection is applied to 12 pieces of teeth 1a which are formed by such stacking and, thereafter, the respective teeth 1a are bent to face an axis.

The insulation part 3 is integrally molded with the stator core 1 using a thermoplastic resin such as PBT (polybutylene terephthalate), for example, and is formed for every tooth 1 a. The insulation part 3 may be assembled to the tooth 1a after molding the insulation part 3. Here, the insulation part 3 may be assembled to the tooth 1a after the insulation part 3 is formed. In this case, the insulation part 3 is divided into a portion on a connection side and a portion on a counter-connection side, and these portions are inserted into the tooth 1 a from both end portions of the tooth 1a in the axial direction thus constituting the insulation part 3.

In the insulation part 3 on the connection side, a plurality of pins necessary for routing magnet wires of windings 2 for respective phases (U phase, V phase, W phase), projections 3b for assembling a substrate 10 described later to the stator 100 and the like are molded. Further, to the insulation part 3 on the connection side, since the connection of the windings 2 is three-phase single Y connection, three terminals 4 (terminals to which electricity is supplied) to which one end of the magnet wire of the windings 2 for each phase is connected and one neutral terminal 5 to which the other end of the magnet wires of the windings 2 for the each phase is connected are assembled. The connection between the magnet wires and the respective terminals 4, 5 is mechanically and electrically performed by a method where a coating film of the magnet wires is melted by heating referred to as "fusing" and melted end portions of the wires and the terminals 4, 5 are connected to each other by caulking.

In the insulation part 3 to which the terminal 4 is assembled, a quadrangular hole 3a having a shape shown in Fig. 2 is formed. The quadrangular hole 3a is formed into a rectangular shape extending in the circumferential direction of the stator core 1 when the insulation part 3 is viewed from above, and two side surfaces of the rectangular shape which face each other in an opposed manner in the circumferential direction are inclined at an angle of approximately 2° such that a distance between the side surfaces is gradually narrowed as the side surfaces extend toward a depth side. Further, two corners of the quadrangular hole 3a where the side surfaces and a bottom surface are brought into contact with each other are formed into a rounded shape having a radius of 0.2mm, for example.

As for the terminal 4, for example, a copper-made flat wire having a width of 1.5mm and a thickness of 0.5mm is used. Hot-dip plating made of a tin copper alloy is applied to the surface of the flat wire. As shown in Fig. 3, the terminal 4 is formed such that the flat wire is bent at approximately 90° with respect to an insulation insertion part 4b which is inserted into the quadrangular hole 3a formed in the insulation part 3, is folded back by bending at approximately 180° at a predetermined position, and is bent at approximately 90° so that the flat wire extends in the direction opposite to the extending direction of the insulation insertion part 4b and forms a substrate insertion part 4a which is inserted into the substrate 10 side. The folded back portion of the flat wire is used as a wire catching part 4c where the magnet wire which becomes a winding start of the winding 2 for each phase is caught. Distal ends at both ends of each terminal 4 are cut obliquely such that the distal ends are inclined toward a wire catching part 4c side. As shown in Fig. 7, each terminal 4 is formed by obliquely cutting one long cupper-made flat wire only by a length necessary for the terminal 4. Here, out of both ends of each terminal 4, only the distal end of the insulation insertion part 4b may be cut obliquely.

When assembling each terminal 4 into the quadrangular hole 3a formed in the insulation part 3, the insulation insertion part 4b is inserted into the quadrangular hole 3a by pushing the wire catching part 4c of the terminal 4 from above. When the insulation insertion part 4b is inserted into the quadrangular hole 3a, as shown in Fig. 4, the terminal 4 is inclined in the direction that the wire catching part 4c is lowered so that a distal end of the insulation insertion part 4b is engaged at the corner of the bottom part of the quadrangular hole 3a. By forming the distal end of the insulation insertion part 4b obliquely, the difference in size between the quadrangular hole 3a and the insulation insertion part 4b in the X direction (circumferential direction of the stator core 1) in Fig. 4 can be made small. Further, since the distal end of the insulation insertion part 4b is engaged with the corner of the bottom part of the quadrangular hole 3a, irregularities in position and posture of the terminal 4 can be reduced.

As shown in Fig. 5, the substrate 10 for supplying electricity to the respective phases of the stator 100 is assembled into the above-mentioned stator 100 of the motor. The substrate 10 is formed into a doughnut shape corresponding to a shape of the stator 100, and includes three circular holes 10a in which columnar projections 3b formed on the insulation parts 3 on a connection side are fitted. By fitting the projections 3b in the circular holes 10a formed in the substrate 10, the substrate 10 is fixed to the stator 100.

Further, three quadrangular holes 10b into which the substrate insertion part 4a of the terminal 4 is inserted are formed in the substrate 10. As shown in Fig. 6, three quadrangular holes 10b are arranged such that, when the substrate 10 is fixed by the projections 3b formed on the insulation parts 3 of the stator 100, the distal ends of the substrate insertion parts 4a of the terminals 4 which are inclined toward the wire catching part 4c side penetrate the substrate 10 and project from the quadrangular holes 10b respectively. In such insertion of the substrate insertion part 4a of the terminal 4 into the quadrangular hole 10b formed in the substrate 10, even when the terminal 4 is bent toward the wire catching part 4c side, the distal end of the substrate insertion part 4a is formed obliquely and hence, the terminal 4 is guided along the quadrangular hole 10b so that the terminal 4 penetrates the quadrangular hole 10b formed in the substrate 10. To realize such an operation, an inclination angle θ of the distal end formed on the substrate insertion part 4a of each terminal 4 is set to 60° or less (see Fig. 3). The substrate insertion parts 4a of the terminals 4 which respectively project from three quadrangular holes 10b formed on the substrate 10 are connected on the substrate 10 by soldering. A gap defined between the quadrangular hole 10b formed in the substrate 10 and the insulation insertion part 4b of the terminal 4 is set to 0.3mm or less with respect to respective surfaces. By setting the gap to such a size, the occurrence of leaking of solder can be prevented.

According to the above-mentioned Embodiment 1, the quadrangular hole 3a formed in the insulation part 3 is formed such that a distance between two side surfaces which face each other in an opposed manner in the circumferential direction of the stator core 1 is gradually narrowed as two side surfaces extend toward a depth side of the hole, and the distal end of the insulation insertion part 4b of the terminal 4 which is inserted into the quadrangular hole 3a is formed obliquely and hence, the insulation insertion part 4b can be easily inserted into the quadrangular hole 3a without chamfering corners of the terminal 4 or without widening the quadrangular hole 3a formed in the insulation part 3 or without bending the insulation insertion part 4b.

When the insulation insertion part 4b of the terminal 4 is inserted into the quadrangular hole 3a, the wire catching part 4c is inclined in the direction that the wire catching part 4c is lowered so that the terminal 4 per se is engaged with the quadrangular hole 3a and hence, the difference in size between the quadrangular hole 3a formed in the insulation part 3 and the insulation insertion part 4b can be made small whereby irregularities in position and posture of the terminal 4 can be reduced.

Further, when the substrate 10 is assembled to the stator core 1 by fitting the projections 3b of the insulation parts 3 in the circular holes 10a formed in the substrate 10, since the terminal 4 is engaged obliquely with the quadrangular hole 3a formed in the insulation part 3 in a stable manner and also the distal end of the substrate insertion part 4a of the terminal 4 is formed obliquely, the terminal 4 can be easily inserted into the quadrangular hole 10b formed in the substrate 10 without chamfering corners of the terminal 4 or without widening the quadrangular hole 10b formed in the substrate 10. Accordingly, the gap defined between the quadrangular hole 10b formed in the substrate 10 and the substrate insertion part 4a can be made small and hence, there exists no possibility that solder falls toward the substrate 10 side from the gap whereby quality of soldering can be enhanced.

Further, both ends of the terminal 4 are cut obliquely at the time of taking a wire having a length necessary for the terminal 4 from one long copper-made flat wire and hence, a yield rate of a material is enhanced thus realizing the reduction in cost.
Further, due to the above-described advantageous effects, it is possible to provide a high-quality stator of a motor at a low cost.

### Embodiment 2

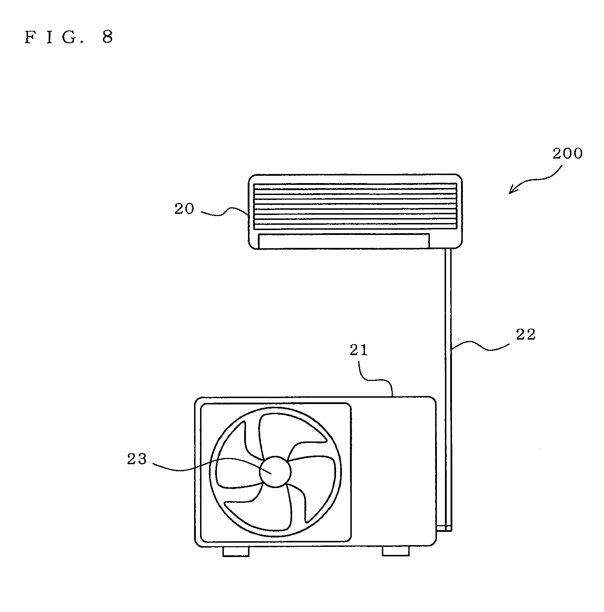

Fig. 8 is a view showing the constitution of an air conditioner according to an Embodiment 2.
The air conditioner 200 shown in Fig. 8 is constituted of an indoor unit 20, and an outdoor unit 21 which is connected with the indoor unit 20 by way of a refrigerant pipe 22. A motor for blower (not shown in the drawing) which rotates a blower 23 is mounted on the outdoor unit 21, and also a motor for blower (also not shown in the drawing) which rotates a blower is mounted on the indoor unit 20.

The above-described motor for blower uses the high-quality stator 100 described in the Embodiment 1. Accordingly, it is possible to enhance a quality of the air conditioner 200.

### [Description of Reference Numerals and Signs]

1: stator core
1 a: tooth
2: winding
3: insulation part
3a: quadrangular hole formed in insulation part
3b: projection of insulation part
4: terminal
4a: substrate insertion part of terminal
4b: insulation insertion part of terminal
4c: wire catching part
θ: inclination angle of substrate insertion part
5: neutral terminal
10: substrate
10a: circular hole formed in substrate
10b: quadrangular hole formed in substrate
20: indoor unit
21: outdoor unit
22: coolant pipe
23: blower
100: stator
200: air conditioner

## Claims

1. A stator (100) of a motor comprising:
a stator core (1) which includes a plurality of teeth (1a) which project toward an axis;
insulation parts (3) which are applied to respective teeth (1a) of the stator core (1);
windings (2) of three-phase single Y connection which are wound around the teeth (1a) by a direct concentration winding method respectively, and
three terminals (4), which are inserted into three holes formed in the insulation parts (3) on a connection side respectively, for supplying electricity to the windings (2) of the three-phase single Y connection, wherein
each of the terminals (4) is formed by bending such that both end portions thereof are directed in directions opposite to each other and a distal end of one end portion which is inserted into each hole is formed obliquely.

2. The stator (100) of a motor of claim 1, wherein each of the holes which is formed in the insulation parts (3) on a connection side is formed into a rectangular shape extending in the circumferential direction of the stator core (1) when the stator core (1) is viewed from above, and two side surfaces of the rectangular shape which face each other in an opposed manner in the circumferential direction are inclined such that a distance between the side surfaces is gradually narrowed as a depth of the hole increases, and
the terminals (4) are inclined toward one direction out of the circumferential direction of the stator core (1) and are engaged with the holes respectively when one end portions of the terminals (4) are inserted into the respective holes.

3. The stator (100) of a motor of claim 1 or 2, wherein each distal end of the other end portions of the terminals (4) is formed obliquely and a substrate (10) is provided that has three holes (10a) into which the other end portions of the terminals (4) are inserted respectively, having the other end portions inserted into the holes (10a) respectively when being fixed onto the stator core (1) in the axial direction.

4. A motor for a blower (23) comprising the stator (100) of a motor of any one of claims 1 to 3.

5. An air conditioner (200) on which the motor for a blower (23) of claim 4 is mounted.
